# FASCICULE DE BREVET EUROPEEN

(11) **EP 3 309 533 B1**
(45) Date de publication et mention de la délivrance du brevet: **07.08.2019**
(21) Numéro de dépôt: 17195768.1
(22) Date de dépôt: 10.10.2017
(51) Int. Cl.: G01M 17/007, A63B 39/00, E01F 13/08, G09B 9/042

(54) **DISPOSITIF D ESSAI D'UN VÉHICULE AUTOMOBILE DOTÉ D'UN SYSTÈME AVANCÉ D AIDE À LA CONDUITE**
TESTVORRICHTUNG EINES KRAFTFAHRZEUGS, DAS MIT EINEM FORTSCHRITTLICHEN FAHRERASSISTENZSYSTEM AUSGESTATTET IST
DEVICE FOR TESTING A MOTOR VEHICLE PROVIDED WITH AN ADVANCED DRIVING ASSISTANCE SYSTEM

(30) Priorité: 11.10.2016 FR 1659774
(43) Date de publication de la demande: 18.04.2018
(73) Titulaire: RENAULT s.a.s., 92100 Boulogne-Billancourt (FR)
(72) Inventeur: Royer, Jean-Michel, 78350 JOUY-EN-JOSAS (FR)

(56) Documents cités:
- EP-A1- 2 192 567
- DE-U1-202014 002 558
- JP-A- 2008 039 686
- US-A1- 2010 192 464
- US-A1- 2011 271 593

## Description

L'invention concerne un dispositif d'essai destiné à valider le comportement de véhicules automobiles dotés d'un système avancé d'aide à la conduite, connu sous le nom d'Advanced Driver Assistance System en anglais, fréquemment abrégé ADAS.

Les systèmes ADAS utilisent un dispositif de détection optique, généralement couplé à un dispositif radar, pour permettre à un véhicule automobile de circuler de manière autonome parmi d'autres véhicules automobiles. En particulier, les systèmes ADAS ont pour but d'éviter de manière autonome les collisions avec d'autres véhicules automobiles.

Pour tester de tels systèmes d'aide à la conduite, on utilise fréquemment des leurres simulant la présence d'un véhicule. Ces leurres, aussi appelées cibles, sont, par exemple, composées d'une représentation d'un véhicule automobile destinée à être repérée par la caméra d'un système ADAS, associée à une plaque en métal ayant pour rôle d'être détecté par le radar du système ADAS.

Pour pouvoir simuler plusieurs situations de circulation, on fixe la cible sur un bras support, lui-même relié transversalement au toit d'un véhicule support, permettant à la cible d'avoir des déplacements identiques à ceux d'un véhicule réel.

Des tests en situation réelle sont alors réalisées, notamment des essais sur route à différentes vitesses, pouvant aller par exemple de 50 à 100km/h.

L'utilisation du véhicule support portant la cible permet de simuler différentes situations de circulation comme par exemple le dépassement par la droite ou le pilage suite à un arrêt brusque.

Lors de ces tests, un conducteur est généralement présent dans le véhicule autonome testé et peut en prendre les commandes si le système ADAS s'avère défaillant. On entend par système défaillant, le fait que le système ADAS ne permet pas, dans certaines situations, au véhicule autonome testé de réaliser la manoeuvre adaptée à la situation de circulation. Par exemple il est attendu d'un véhicule automobile autonome qu'il se décale vers la gauche pour doubler, qu'il ralentisse de manière adaptée quand la cible ralentit ou qu'il évite la cible lors d'un arrêt brusque de la cible.

Dans le domaine des dispositifs de test de véhicule doté d'un système ADAS, il est connu des cibles téléguidées faites en matériau destructible, par exemple en mousse ou tout autre matériau adapté, qui permettent au véhicule testé de passer au travers de la cible en cas de forte collision.

Les cibles destructibles sont adaptées à des vitesses d'essai relativement élevées, par exemple à des vitesses supérieures à 100 km/h, mais ces cibles présentent l'inconvénient d'être à usage unique ce qui augmente le coût des phases d'essai.

Il est aussi connu du document JP 2008 039686-A des cibles dites portées qui sont réutilisables après un essai échoué. Les cibles portées sont fixées sur un cadre de fixation monté à rotation sur un bras support, lui-même relié à un véhicule support.

Le cadre de fixation de la cible est animé d'un mouvement de balancier lors d'un contact avec le véhicule testé. Cependant, un tel mouvement de balancier présente plusieurs risques. En effet, après un choc, le cadre de fixation peut retomber sur le véhicule autonome testé et par conséquent l'endommager. En outre, en retombant sur le véhicule autonome testé, le cadre peut présenter un danger pour le conducteur de ce véhicule.

Il est alors possible de limiter la vitesse d'essai, ou l'écart de vitesse entre la cible et le véhicule autonome testé, pour minimiser l'impact du choc sur le cadre de fixation de la cible, mais ceci réduit les possibilités de test.

Il existe donc le besoin d'un dispositif d'essai réutilisable et plus sécurisé.

On propose un dispositif d'essai d'un véhicule automobile doté d'un système avancé d'aide à la conduite, comprenant un cadre de fixation d'une cible, un bras support, le cadre étant monté à rotation au bras support autour d'une axe de rotation parallèle audit bras support, le cadre étant apte à passer d'une position détectable, dans laquelle la cible est détectable par le véhicule testé, à une position escamotée, dans laquelle la cible est invisible pour le système de détection du véhicule testé.

Le dispositif d'essai comprend des moyens d'entrainement actifs aptes à forcer le passage du cadre de la position détectable à la position escamotée et des moyens de maintien du cadre en position escamotée.

Ainsi lors d'un contact avec le véhicule testé le cadre remonte et est maintenu en position escamotée, laissant suffisamment d'espace pour que le véhicule testé puisse passer sous le dispositif d'essai. Ceci évite que le cadre retombe sur le véhicule testé et l'endommage.

Avantageusement et de façon non limitative, les moyens d'entrainement actifs comprennent au moins un ressort fixé d'une part au bras support et d'autre part au cadre, ledit ressort définissant une position critique par rapport à laquelle, d'un côté le ressort rappelle le cadre vers la position détectable et d'un autre côté le ressort rappelle le cadre vers la position escamotée.

Avantageusement et de façon non limitative, la position critique correspond à la position du ressort lorsqu'il s'étend dans un plan défini d'une part par l'axe de rotation du cadre, et d'autre part par le point d'accrochage dudit ressort hélicoïdal au bras support.

L'utilisation d'un ressort permet d'obtenir un moyen d'entrainement actif relatif peu coûteux à produire, robuste et simple à régler. En outre, le fait de fixer le ressort d'une part au bras et d'autre part au cadre, participe à un maintien robuste du cadre par rapport à bras.

Avantageusement et de façon non limitative, les moyens d'entrainement actifs comprennent une pluralité de ressort hélicoïdaux.

Avantageusement et de façon non limitative, les moyens d'entrainements actifs peuvent comprendre un organe de contrepoids installé à l'opposé du cadre par rapport au bras support. Ainsi, le poids exercé par cet organe de contrepoids, agissant de paire avec la force de rappel des ressorts, permet d'entrainer activement le cadre en position escamotée puis de le maintenir dans ladite position escamotée.

Avantageusement et de façon non limitative, l'organe de contrepoids comprend une plaque solidaire du cadre, et des masselottes aptes à être fixées de manière amovibles à ladite plaque. Ainsi, il est possible d'adapter simplement la force appliquée par l'organe de contrepoids sur le cadre en fonction de la sensibilité et de la vitesse de transition voulue pour le cadre entre sa position détectable et la position escamotée.

Avantageusement et de façon non limitative, les moyens de maintien peuvent comprendre un crochet de maintien fixé sur le bras support et sur lequel vient se positionner le cadre quand il est en position escamotée. Ainsi le crochet de maintien est une solution simple à réaliser et qui permet de replacer rapidement le cadre en position détectable en le décrochant manuellement.

Avantageusement et de façon non limitative, les moyens de maintien peuvent contenir un organe de contrepoids. Par exemple le même que celui des moyens d'entrainements actifs. Ainsi, l'organe de contrepoids participe aux moyens d'entrainements actifs et aux moyens de maintien, ce qui permet de réduire l'encombrement et le poids du dispositif d'essai en limitant le nombre d'élément nécessaire au fonctionnement.

Avantageusement et de façon non limitative, le dispositif comprend un organe anti-retour du cadre lui imposant un unique sens de rotation. Ainsi, on peut réaliser des essais dans une configuration où le véhicule support se déplace par exemple à des vitesses supérieures à 100km/h.

Avantageusement et de manière non limitative, les moyens de fixation du cadre au bras support peuvent comprendre au moins un roulement à rouleaux sphériques. Ainsi, la fixation et la rotation est assurée par un moyen fiable et peu coûteux à produire.

L'invention concerne aussi un véhicule automobile comprenant un dispositif d'essai tel que décrit précédemment.

D'autres particularités et avantages de l'invention ressortiront à la lecture de la description faite ci-après d'un mode de réalisation particulier de l'invention, donné à titre indicatif mais non limitatif, en référence aux dessins annexés sur lesquels :
- la figure 1 est une vue en perspective du dispositif d'essai monté sur un véhicule support.
- la figure 2 est une vue en perspective du cadre de fixation selon un mode de réalisation de l'invention ;
- la figure 3 est une vue de détail du cadre monté sur un bras support selon le mode de réalisation de la figure 2 ;
- les figures 4a, 4b, 4c, 4d sont des représentations schématiques de la cinématique d'entrainement actif du cadre de fixation, selon le mode de réalisation de la figure 2, de la position détectable vers la position escamotée.
- les figures 5a et 5b sont des vues en perspective d'un dispositif imposant au cadre, selon le mode de réalisation de la figure 2, un unique sens de rotation ;
- la figure 6 est une vue en perspective d'un crochet de maintien du cadre selon le mode de réalisation de la figure 2, fixé un bras support.

Dans la présente description, les termes avant, arrière, supérieur, inférieur, font référence aux directions avant et arrière du véhicule, lorsque le dispositif d'essai est monté sur le véhicule. Les axes X, Y, Z, correspondent respectivement à l'axe longitudinal (d'avant en arrière), transversal et vertical du véhicule.

Par sensiblement horizontal, longitudinal ou vertical, on entend une direction/un plan formant un angle d'au plus 20°, voire d'au plus 10° ou d'au plus 5° avec une direction/un plan horizontal, longitudinal ou vertical.

Par sensiblement parallèle, perpendiculaire ou à angle droit, on entend une direction/un angle s'écartant d'au plus 20°, voire d'au plus 10° ou d'au plus 5° d'une direction parallèle, perpendiculaire ou d'un angle droit.

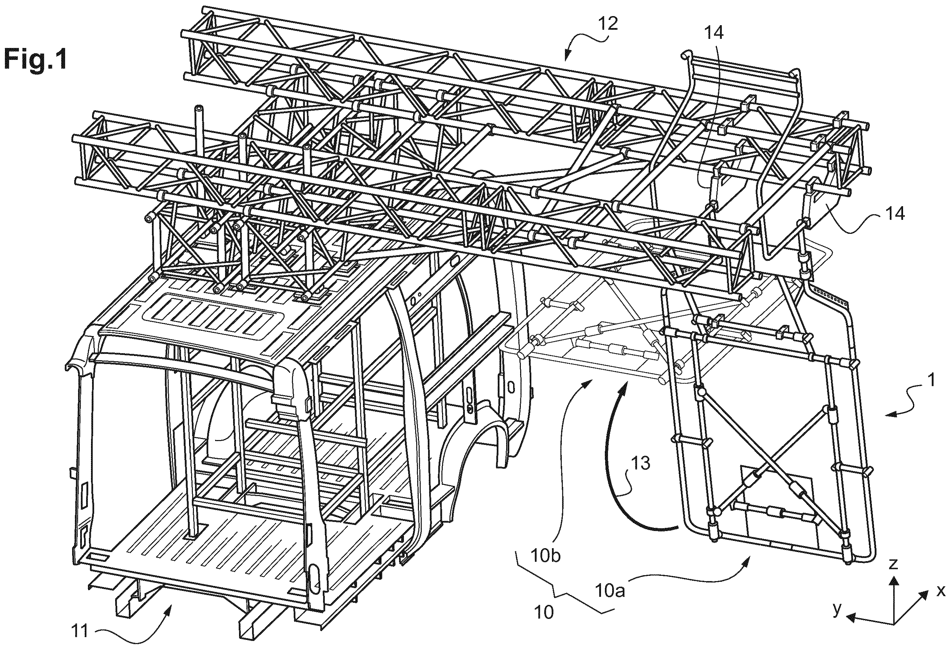

En référence aux figures 1 à 3 se rapportant à un même mode de réalisation, un véhicule support 11 soutient un bras support 12 auquel est monté à rotation un dispositif d'essai 1 pour des essais d'un véhicule automobile autonome ou doté d'un système avancé d'aide à la conduite.

Ce dispositif d'essai 1 comprend un cadre 10 de fixation d'une cible apte à être détectée par le véhicule automobile testé.

La fixation du cadre 10 au bras support 12 est réalisée au moyen d'éléments de fixation 14.

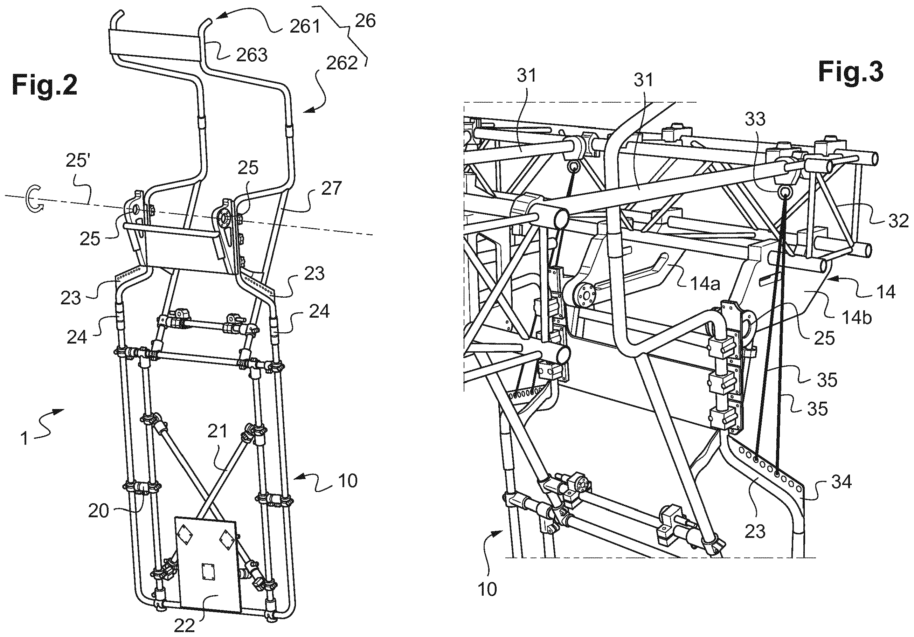

Ici, les éléments de fixation 14 sont formés de deux parois de fixation 14a et 14b, représentées figure 3, parallèles l'une par rapport à l'autre et maintenu à distance l'une de l'autre, s'étendant chacune dans un plan sensiblement vertical longitudinal par rapport au véhicule automobile support.

Chaque paroi de fixation 14a et 14b est fixée au bras support 12 en y étant soudé, ou alternativement vissé, riveté, clipsé, ou par tout autre moyen connu de l'homme du métier.

Chaque paroi 14a, 14b présente un orifice destiné à recevoir un moyen de rotation 25, ici un roulement à rouleau sphérique, ce qui permet la rotation du cadre 10 selon un axe de rotation 25' s'étendant sensiblement parallèlement au bras support 12.

Ceci permet le passage du cadre 10 d'une position détectable 10a dans laquelle une cible installée sur le cadre 10, peut être détectée par un véhicule automobile testé, vers une position escamotée 10b dans laquelle le cadre 10 pivote avec de ne plus constituer un obstacle pour le véhicule automobile testé.

Le sens d'escamotage, c'est-à-dire le sens de passage de la position détectable 10a à la position escamotée 10b est donné par la flèche 13. Le sens d'escamotage va de l'arrière vers l'avant du véhicule support du bras support 12.

En référence à la figure 2, le cadre de fixation de cible 10 est réalisé par un assemblage de tubes en acier inoxydable, par exemple des tubes d'échappement, mais peut être réalisé en tout autre matériau adapté.

Les tubes formant le cadre 10 sont assemblés par des brides 20. Un tel assemblage facilite l'entretien du dispositif, et plus particulièrement celui du cadre de fixation 10, en permettant de remplacer les composants détériorés sans avoir à démonter entièrement le dispositif.

Un croisillon 21 est installé dans la partie centrale du cadre 10 et est fixé par des brides 20.

Le croisillon 21 permet de rigidifier le cadre 10.

On installe sur le croisillon 21 une plaque métallique 22 destinée à être détectée par le radar du véhicule testé, lorsque le cadre est en position détectable.

Le cadre 10 présente deux épaulements 23 de liaison entre le cadre 10 et une partie supérieure du cadre où sont agencés des roulements à rouleaux sphérique permettant de faire pivoter le cadre autour de l'axe de rotation 25'.

La liaison entre les épaulements 23 et le cadre 10 s'effectue avec des manchons tubulaires 24, ici réalisé dans des tubes expansés.

Un organe de contrepoids 26 monté solidaire du cadre 10, comprend une plaque de fixation 263 destinée à recevoir des masselottes, non représentées.

Les masselottes sont, par exemple, vissées sur la plaque 263 mais peuvent aussi être, par exemple, clipsées, accrochées au moyen de rivets ou par tout autre moyen de fixation adapté.

Les masselottes peuvent par exemple être réalisées en acier inoxydable, ce qui permet de les conserver en bon état tout le long des phases de test.

La plaque de fixation 263 est solidarisée au cadre 10 par deux bras de maintien 262 de sorte que la plaque de fixation 263 est disposée au dessus de la partie supérieure du cadre 20 où sont agencés les roulements à rouleaux sphériques.

Chaque bras de maintien 262 s'étend entre les moyens de rotation du cadre 25 et une extrémité libre 261 au voisinage de laquelle la plaque de fixation est fixée sur les bras de maintien 262.

Par ailleurs, chaque bras de maintien 262 présente une portion profilée en U, appelée portion en U, suivant une vue de côté dans une direction sensiblement parallèle à l'axe de rotation 25'.

La portion en U est adaptée à la forme du bras support 12 de sorte à venir reposer sur le bras support 12. Ceci constitue une butée interdisant la rotation du cadre 10 au-delà de la position escamotée 10b, et participe au maintien du cadre 10 en position escamotée 10b.

Des contreforts 27 sont d'une part soudés à la portion en U des bras de maintien 262, et d'autre part fixé au cadre 10 par des brides 20.

Des ressorts 35, ici des ressorts hélicoïdaux de rappel, sont installés d'une part au cadre 10 et d'autre part au bras support 12, de sorte à produire une tension de rappel sur le cadre 10.

Le cadre 10 étant monté mobile en rotation par rapport au bras support 12, les ressorts 35 sont aptes à le maintenir dans deux position stables : dans la position détectable, aussi appelée première position stable, et dans la position escamotée, aussi appelée deuxième position stable.

Autrement dit, le dispositif d'essai 1, comprenant le cadre 10, le bras support 12 et les ressorts 35, est un dispositif bistable.

Chaque ressort 35 tend à rappeler le cadre 10 vers l'une des positions stable, selon que le ressort est d'un côté ou de l'autre d'une position dite position critique.

La position critique d'un ressort 35 est définie comme étant la position atteinte par le ressort 35 lorsqu'il s'étend selon sa direction d'élongation dans un plan défini par l'axe de rotation 25' du cadre 10 et par le point d'ancrage du ressort 35 sur le bras support 12.

Selon un mode de réalisation préféré, on agence les ressorts 35 de telle sorte que leur position critique est une position critique commune, autrement dit que leurs positions critiques respectives sont définies par un même plan.

Cependant, si ce n'était pas le cas, le cadre serait entrainé vers la position stable pour laquelle la plus grande force de rappel est appliquée par les ressorts 35.

En référence à la figure 3, des tubes d'accrochage 31 destinés à recevoir en fixation les ressorts 35 sont placés à l'aplomb des épaulements 23 du cadre 10 et.

Ces tubes d'accrochage 31 sont fixés dans un plan perpendiculaire à l'axe de rotation 25' et à l'axe principal dans lequel s'étend le bras support 12. Autrement dit les tubes d'accrochage 31 s'étendent dans une direction sensiblement parallèle à la direction d'entrainement du véhicule support 11.

Sur les tubes 31 sont placé des brides 32 aptes à coulisser le long desdits tubes 31. Les brides 32 peuvent ainsi être desserrées pour coulisser le long du tube 31 sur lequel elle est installée ou être serrée pour être fixe par rapport au tube 31.

Chaque bride 32 est équipée d'un anneau 33, ici réalisé en acier, pour recevoir au moins une extrémité de fixation d'un ressort 35.

Chaque épaulement 23 du cadre 10 présente une plaque d'accrochage 34 pour y accrocher une autre extrémité d'accrochage d'un ressort 35.

Les plaques d'accrochage 34 peuvent par exemple être soudées aux épaulements 23 respectifs.

Les plaques d'accrochage 34 sont percées d'une pluralité d'orifices décalés verticalement les uns par rapport aux autres.

Chaque orifice présente un diamètre adapté pour être traversés par une extrémité d'un ressort, par exemple compris entre 20 et 30 mm.

Ainsi, chaque ressort 35 est accroché à une extrémité à un anneau 33 d'une bride 32 et à une autre extrémité dans un orifice d'une plaque d'accrochage 34.

On peut par exemple prévoir entre 1 et 4 ressorts par plaque d'accrochage 34, ou plus. Ceci permet de moduler la tension totale du rappel appliquée au cadre 10 pour l'entrainer entre ses deux positions stables.

Chaque ressort 35 est définit par une tension de rappel propre qui peut être distincte des autres ressorts. Cependant, on définit de manière préférée une tension de rappel totale égale pour les deux plaques d'accrochage 34.

De par le décalage vertical des orifices d'une même plaque d'accrochage 34 les uns par rapport aux autres, il est possible de modifier simplement la tension que les ressorts 35 appliquent sur le cadre 10 en changeant d'orifice d'accrochage du ressort sur la plaque d'accrochage 34.

On peut en outre changer simplement la position critique de chaque ressort 35, en déplaçant la bride d'accrochage associée brides 32 le long du tube 31 sur laquelle elle est fixée.

Dans des conditions d'essai d'un véhicule automobile ADAS, le cadre de fixation est tout d'abord installé en position détectable 10a, qui correspond à sa première position stable, selon la figure schématique de cinématique 4a.

Le cadre 10 est dans cette position, d'une part soumis à la force de rappel des ressorts 35 et bloqué en rotation dans la direction de rappel par une butée en caoutchouc 41. Ainsi le cadre 10 est maintenu stable, notamment lorsque le véhicule automobile est entrainé en mouvement.

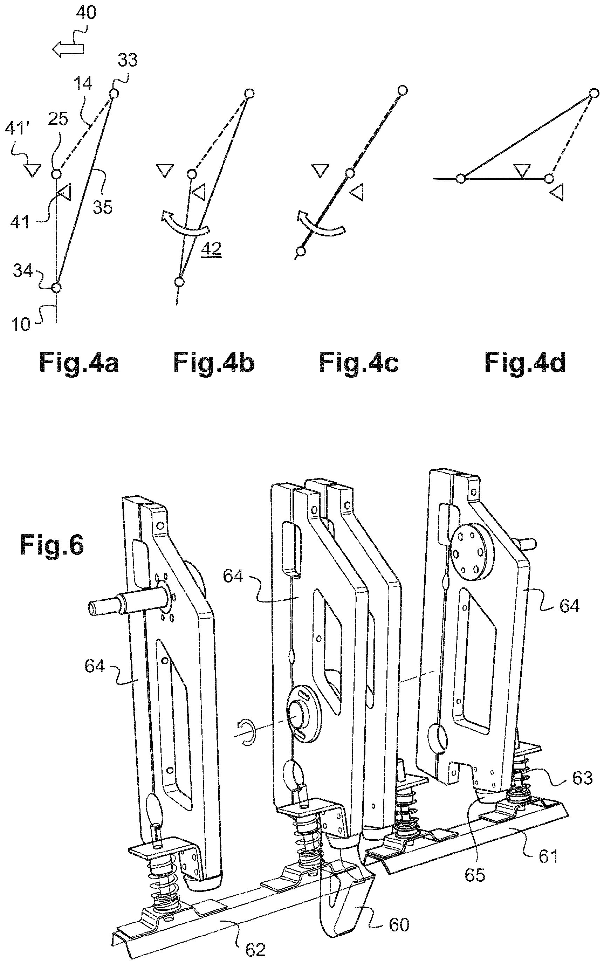

Lors d'un choc entre le véhicule testé et le cadre 10, le véhicule testé exerce une force sur le cadre 10 dans sa direction d'avancement, tel que représenté figure 4a par la flèche 40. Le choc provoque un déplacement du cadre 10, en particulier une rotation autour de son axe de rotation 25', provoquant une élongation et un déplacement des ressorts 35.

Ce décalage se poursuit jusqu'à ce que le cadre 10 amène les ressorts 35 à atteindre leur position critique, tel que représenté figure 4c.

On parle aussi de position critique du cadre 10, laquelle correspond à la position du cadre 10 limite au-delà de laquelle, d'un côté le cadre 10 est entrainé vers sa première position stable, et de l'autre côté le cadre 10 est entrainé vers sa deuxième position stable. La position critique du cadre 10 est directement dépendante de la position critique de chacun des ressorts 35.

Par simplicité de compréhension, dans la présente description on considère que les ressorts 35 présentent une même position critique, tel que la cinématique le représente figure 4c.

Lorsque les ressort 35 ont passés la position critique, alors le cadre 10 est entrainé vers la position escamotée, qui est sa deuxième position stable, tel que représenté figure 4d.

Le poids de l'organe de contrepoids 26, non représenté sur les figures 4a, 4b, 4c, 4d, participent alors au rappel vers la position escamotée, en exerçant une pression vertical sur la partie supérieure du cadre 10.

Le dispositif d'essai 1, lorsque le cadre 10 est dans la position critique représentée par la figure 4c, est particulièrement instable. Le dispositif d'essai 1 est calibré de sorte que l'énergie transmise par le véhicule testé au dispositif d'essai 1 est suffisante pour dépasser la situation critique et escamoter le cadre 10.

Le mouvement d'entrainement du cadre 10 vers la position escamotée est stoppé par une butée en caoutchouc 40', qui interdit la rotation du cadre 10 au-delà d'une position escamotée prédéfinie.

En particulier le cadre 10 en position escamotée, s'étend dans un plan sensiblement horizontal, ce qui correspond à une rotation de sensiblement 90°, ou entre 80° et 100°, par rapport à sa position détectable.

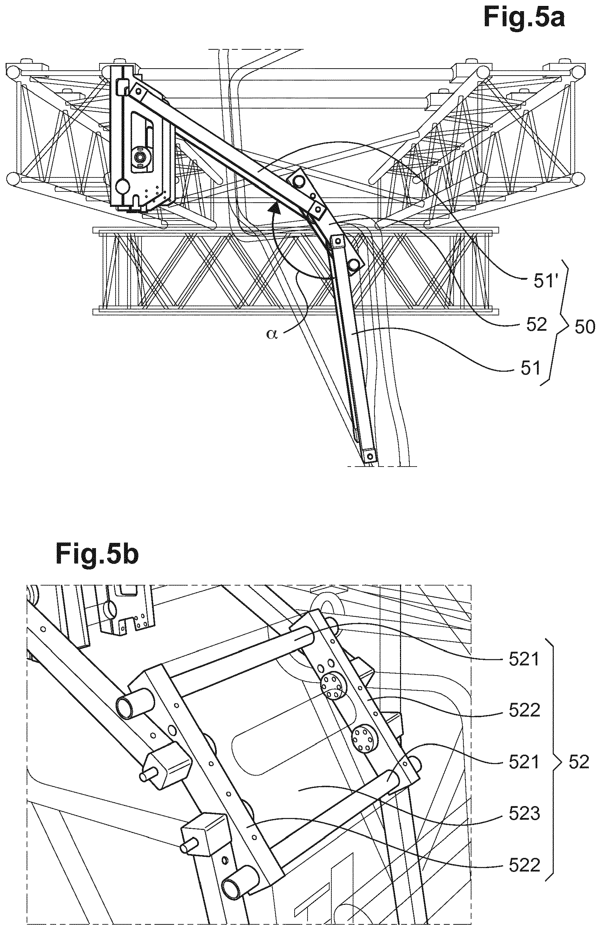

En référence aux figures 5a et 5b, un dispositif anti-retour 50 du cadre 10 peut se substituer ou s'ajouter à la butée de maintien en caoutchouc 41 en position détectable.

Ce dispositif anti-retour 50 est composé de deux paires de tubes de section rectangulaire 51, 51' articulées autour d'une partie centrale 52.

La paire de tube 51 relie la partie centrale 52 du dispositif anti-retour 50 au cadre 10, ici au moyen de liaisons pivot.

La paire de tube 51' relie la partie centrale 52 du dispositif anti-retour 50 au bras support 12, ici au moyen de liaisons pivot.

La partie centrale 52 du dispositif anti-retour 50 comprend deux tubes cylindriques 523, insérés transversalement dans des tubes de section rectangulaire 522.

Une plaque en aluminium évidée 522 est soudée aux tubes de section rectangulaire 523 afin de conserver la géométrie de l'ensemble.

La paire de tubes cylindriques 521 sert de butée pour que les deux paires de tubes de section rectangulaire 51, 51' forment un angle obtus a.

L'angle α est maintenu obtus afin de faciliter l'escamotage du cadre 10, ce qui serait rendu impossible par un angle α plat.

La paire de tubes cylindriques 521 est faite en matériau déformable, par exemple en acier inox déformable ou tout autre matériau adapté, ce qui leur permet de se déformer en cas de forte charge protégeant ainsi le dispositif anti-retour 50.

Les deux paires de tube 51 et 51' sont de longueurs différentes pour permettre à la plaque centrale 52 d'être sensiblement horizontale lorsque le cadre 10 est en position escamotée 10a, réduisant l'encombrement du dispositif anti-retour 50.

Ce dispositif anti-retour 50 permet ainsi d'interdire la rotation du cadre au-delà de sa position détectable, dans la direction inverse à la direction définie pour le passage vers la position escamotée, tout en autorisant le passage vers cette position escamotée. Le dispositif anti-retour 50 permet ainsi d'obtenir un maintien robuste du cadre 10 en position détectable, notamment lorsque le véhicule porteur est entrainé à grande vitesse, par exemple au-delà de 100km/h, tout en permettant un passage vers la position escamotée, en cas de choc avec le véhicule automobile testé.

En référence à la figure 6, un crochet de maintien 60 est solidarisé au bras support 12 par les moyens de fixation 64.

Lorsque le cadre 10 passe en position escamotée 10b, il s'accroche au crochet de maintien 60 et pousse des profilés creux 61.

Les profilés creux 61 possèdent un fond plat et deux côtés obliques.

Les profilés creux 61 sont reliées aux moyens de fixation 64 du crochet de maintien 60 par des ressorts de compression 63.

L'ensemble composé des profilés creux 61 et des ressorts de compression 63 permet d'amortir le cadre 10 lors de l'escamotage, évitant ainsi d'endommager la cible.

Des butées 65, ici en caoutchouc, permettent d'arrêter la compression des ressorts de compression 63 et ainsi d'amortir l'escamotage du cadre 10.

Le crochet de maintien 60 est solidarisé aux moyens de fixation 64 de telle sorte que le crochet 60 peut pivoter autour de l'axe de rotation 66.

On peut par exemple, solidariser le crochet 60 avec une liaison pivot. La rotation du crochet 60 autour de l'axe 66 permet de décrocher manuellement le cadre 10 afin de le placer en position détectable après un test.

## Revendications

1. Dispositif d'essai (1) d'un véhicule automobile doté d'un système avancé d'aide à la conduite, comprenant un cadre (10) de fixation d'une cible, un bras support (12), le cadre (10) étant monté à rotation au bras support (12) autour d'une axe de rotation (25') parallèle audit bras support (12), le cadre (10) étant apte à passer d'une position détectable (10a), dans laquelle la cible est détectable par le véhicule testé, à une position escamotée (10b), dans laquelle la cible est invisible pour le système de détection du véhicule testé, le dispositif d'essai comprend des moyens d'entrainement actifs (35, 26) aptes à forcer le passage du cadre (10) de la position détectable (10a) à la position escamotée (10b) et des moyens de maintien du cadre (35, 26, 60) en position escamotée, **caractérisé en ce que** les moyens d'entrainement actifs (35, 26) comprennent au moins un ressort (35) fixé d'une part au bras support (12) et d'autre part au cadre (10), ledit ressort (35) définissant une position critique par rapport à laquelle, d'un côté le ressort (35) rappelle le cadre (10) vers la position détectable (10a) et d'un autre côté le ressort (35) rappelle le cadre (10) vers la position escamotée (10b).

2. Dispositif d'essai (1) selon la revendication 1, **caractérisé en ce que** ladite position critique correspond à la position du ressort (35) lorsqu'il s'étend dans un plan défini d'une part par l'axe de rotation (25') du cadre (10), et d'autre part par le point d'accrochage dudit ressort hélicoïdal (35) au bras support (12).

3. Dispositif d'essai (1) selon la revendication 1 ou 2, **caractérisé en ce que** les moyens d'entrainement actifs (35, 26) comprennent une pluralité de ressorts (35) hélicoïdaux.

4. Dispositif d'essai (1) selon l'une quelconque des revendications 1 à 3, **caractérisé en ce que** les moyens d'entrainement actifs (35, 26) comprennent un organe de contrepoids (26) installé à l'opposé du cadre (10) par rapport au bras support (12).

5. Dispositif d'essai (1) selon la revendication 4, **caractérisé en ce que** l'organe de contrepoids (26) comprend une plaque (263) solidaire du cadre (10), et des masselottes aptes à être fixées de manière amovible à ladite plaque (263).

6. Dispositif d'essai (1) selon l'une quelconque des revendications 1 à 5, **caractérisé en ce que** les moyens de maintien du cadre (10) en position escamotée (10b) comprennent un crochet de maintien (60) fixé sur le bras support (12).

7. Dispositif d'essai (1) selon l'une quelconque des revendications 1 à 6, **caractérisé en ce que** les moyens de maintien du cadre (10) en position escamotée (10b) comprennent un organe de contrepoids (26), par exemple le même que celui des moyens d'entrainements actifs (35, 26).

8. Dispositif d'essai (1) selon l'une quelconque des revendications 1 à 7, **caractérisé en ce qu'**il comprend un dispositif anti-retour (50) imposant au cadre (10) un unique sens de rotation.

9. Véhicule automobile comprenant un dispositif d'essai selon l'une quelconque des revendications 1 à 8.

## Patentansprüche

1. Testvorrichtung (1) eines Kraftfahrzeugs, ausgestattet mit einem fortschrittlichen Fahrerassistenzsystem, umfassend einen Rahmen (10) für die Befestigung eines Ziels, einen Tragarm (12), wobei der Rahmen (10) am Tragarm (12) um eine Drehachse (25') drehend angebracht ist, die parallel zum Tragarm (12) ist, wobei der Rahmen (10) imstande ist, aus einer detektierbaren Stellung (10a), in welcher das Ziel von dem getesteten Fahrzeug detektierbar ist, in eine eingezogene Stellung (10b), in welcher das Ziel für das Detektionssystem des getesteten Fahrzeugs unsichtbar ist, zu wechseln, wobei die Testvorrichtung aktive Antriebsmittel (35, 26) umfasst, die imstande sind, den Wechsel des Rahmens (10) aus der detektierbaren Stellung (10a) in die eingezogene Stellung (10b) und der Haltemittel des Rahmens (35, 26, 60) in eingezogene Stellung zu veranlassen, **dadurch gekennzeichnet, dass** die aktiven Antriebsmittel (35, 26) mindestens eine Feder (35) umfassen, die zum einen am Tragarm (12) und zum anderen am Rahmen (10) befestigt ist, wobei die Feder (35) eine kritische Stellung festgelegt, in Bezug auf die von einer Seite die Feder (35) den Rahmen (10) in die detektierbare Stellung (10a) zurückstellt und von einer anderen Seite die Feder (35) den Rahmen (10) in die eingezogene Stellung (10b) zurückstellt.

2. Testvorrichtung (1) nach Anspruch 1, **dadurch gekennzeichnet, dass** die kritische Stellung der Stellung der Feder (35) entspricht, wenn sie sich in einer Ebene erstreckt, die zum einen von der Drehachse (25') des Rahmens (10) und zum anderen von dem Einhängepunkt der Spiralfeder (35) am Tragarm (12) festgelegt ist.

3. Testvorrichtung (1) nach Anspruch 1 oder 2, **dadurch gekennzeichnet, dass** die aktiven Antriebsmittel (35, 26) eine Vielzahl von Spiralfedern (35) umfassen.

4. Testvorrichtung (1) nach einem der Ansprüche 1 bis 3, **dadurch gekennzeichnet, dass** die aktiven Antriebsmittel (35, 26) ein Gegengewichtsorgan (26) umfassen, das gegenüber dem Rahmen (10) in Bezug auf den Tragarm (12) installiert ist.

5. Testvorrichtung (1) nach Anspruch 4, **dadurch gekennzeichnet, dass** das Gegengewichtsorgan (26) eine Platte (263) umfasst, die mit dem Rahmen (10) fest verbunden ist, und Gewichte, die imstande sind, an der Platte (263) lösbar befestigt zu sein.

6. Testvorrichtung (1) nach einem der Ansprüche 1 bis 5, **dadurch gekennzeichnet, dass** die Haltemittel des Rahmens (10) in eingezogener Stellung (10b) einen Haltehaken (60) umfassen, der auf dem Tragarm (12) befestigt ist.

7. Testvorrichtung (1) nach einem der Ansprüche 1 bis 6, **dadurch gekennzeichnet, dass** die Haltemittel des Rahmens (10) in eingezogener Stellung (10b) ein Gegengewichtsorgan (26) umfassen, beispielsweise das dasselbe wie das der aktiven Antriebsmittel (35, 26).

8. Testvorrichtung (1) nach einem der Ansprüche 1 bis 7, **dadurch gekennzeichnet, dass** sie eine Rückkehrsperrvorrichtung (50) umfasst, die dem Rahmen (10) eine einzige Drehrichtung aufzwingt.

9. Kraftfahrzeug, umfassend eine Testvorrichtung nach einem der Ansprüche 1 bis 8.

## Claims

1. Device (1) for testing a motor vehicle provided with an advanced driving assistance system, comprising a frame (10) for attaching a target, a support arm (12), the frame (10) being mounted on the support arm (12) so as to be able to rotate about an axis of rotation (25') parallel to said support arm (12), the frame (10) being able to pass from a detectable position (10a), in which the target can be detected by the tested vehicle, to a retracted position (10b), in which the target is invisible for the detection system of the tested vehicle, the testing device comprises active drive means (35, 26) that are able to make the frame (10) pass from the detectable position (10a) to the retracted position (10b), and means (35, 26, 60) for holding the frame in the retracted position, **characterized in that** the active drive means (35, 26) comprise at least one spring (35) attached on one hand to the support arm (12) and on the other hand to the frame (10), said spring (35) defining a critical position on one side of which the spring (35) returns the frame (10) to the detectable position (10a), and on the other side of which the spring (35) returns the frame (10) to the retracted position (10b).

2. Testing device (1) according to Claim 1, **characterized in that** said critical position corresponds to the position of the spring (35) when it extends in a plane defined on one hand by the axis of rotation (25') of the frame (10) and on the other hand by the point at which said coil spring (35) is attached to the support arm (12).

3. Testing device (1) according to Claim 1 or 2, **characterized in that** the active drive means (35, 26) comprise a plurality of coil springs (35).

4. Testing device (1) according to any one of Claims 1 to 3, **characterized in that** the active drive means (35, 26) comprise a counterweight member (26) installed opposite the frame (10) with respect to the support arm (12).

5. Testing device (1) according to Claim 4, **characterized in that** the counterweight member (26) comprises a plate (263) secured to the frame (10), and weights which can be removably attached to said plate (263).

6. Testing device (1) according to any one of Claims 1 to 5, **characterized in that** the means for holding the frame (10) in the retracted position (10b) comprise a retaining hook (60) attached to the support arm (12) .

7. Testing device (1) according to any one of Claims 1 to 6, **characterized in that** the means for holding the frame (10) in the retracted position (10b) comprise a counterweight member (26), for example the same as that of the active drive means (35, 26).

8. Testing device (1) according to any one of Claims 1 to 7, **characterized in that** it comprises a non-return device (50) which imposes a single direction of rotation for the frame (10).

9. Motor vehicle comprising a testing device according to any one of Claims 1 to 8.
